# EUROPEAN PATENT APPLICATION

(11) **EP 3 597 044 A2**
(43) Date of publication of application: **22.01.2020**
(21) Application number: 19170414.7
(22) Date of filing: 19.04.2019
(51) Int. Cl.: A23C 3/03, A23C 3/05, B65D 85/80, B65D 79/00, B65D 51/16

(54) **SYSTEM AND METHOD FOR PROCESSING MILK**

(30) Priority: 19.07.2018 NZ 18744444
(71) Applicant: Parkview Green Dairy Group Limited, Mount Wellington, Auckland 1060 (NZ)
(72) Inventor: Rumbold, Anthony John, 1023 Auckland (NZ)
(74) Representative: Vesterinen, Jussi Tapio

(57) **Abstract**

The present invention relates to a system for processing milk, which comprises a thermal pasteurization device and an autoclaving treatment device. The raw milk is sequentially subjected to thermal pasteurization and autoclaving treatment to obtain milk which can be transported by a long distance. The present invention has the beneficial effects that the method for processing milk of the present invention is used for extending the service life of the pure milk and improving the storage capacity thereof; the short service life reduces the influence on the nutrient composition and flavor of the milk; the obtained milk has a taste closer to the fresh raw milk, and the storage time is longer; after thawing to restore the liquid state, the shelf life can be up to 21 days; the milk processed by the method of the present invention can be used for transporting by a long distance.

## Description

### TECHNICAL FIELD

The present invention belongs to the technical field of food processing, and in particular relates to a system and method for processing milk.

### BACKGROUND

Consumers often demand high-quality products and pay more attention to the freshness, cleanliness, taste and nutrients of the products, while the products which process the raw products as little as possible and contain fewer or no preservatives are considered to maintain or keep more nutritional value of the products.

The goal of the food industry is not only to make food more natural, but also to effectively control the number of microorganisms to make it safer, which also maximizes the shelf life for distribution and sales.

Traditional thermal sterilization techniques, such as thermal pasteurization, are often used to treat products at high temperatures to kill harmful pathogens, but because many nutrients are heat sensitive, the thermal sterilization technology reduces their nutritional quality.

The non-thermal or cold sterilization technique, such as a high-pressure processing (HPP) system, is very effective in maintaining product flavor, nutritional quality and freshness, which also eliminates harmful spoilage microorganisms. The system is a system that does not require the use of chemical preservatives. However, the high-pressure processing (HPP) is not sufficient itself to meet regulatory requirements for extending the shelf life of dairy products.

In general, when only a series of pathogens are eliminated using conventional thermal pasteurization, transportation is problematic in addition to expensive air freight. In addition, raw milk which is frozen alone or thermally pasteurized milk which is frozen can only maintain a very short shelf life after being thawed for about 7-10 days, which will also produce some minor harmful substances. Some freezing methods, such as liquid immersion freezing, have been evaluated and tested. The freezing technique using liquid nitrogen is a rapid freezing method, but it is still limited by product processing and liquid nitrogen cost. At the same time, these freezing methods also increase the complexity of the engineering design to ensure the stability of the milk bottle during the freezing process. Due to the cost of refrigerant gas, the freezing curve of these methods, i.e., the relationship between temperature and time, shows that it does not have a cost-effective advantage for processing milk.

Currently, another major problem with delivering milk to other countries is that it is difficult to maintain the taste of fresh milk.

### SUMMARY

In order to solve the problem existing in the prior art, the present invention provides a system and method for processing milk with the characteristics of being closer to the taste of fresh raw milk and having a longer storage time.

It is an object of the present invention to provide a system for processing milk.

A method for processing milk according to a specific embodiment of the present invention is provided, wherein the method comprises the following steps.

A system for processing milk according to a specific embodiment of the present invention is provided, wherein the system comprises a thermal pasteurization device and an autoclaving treatment device connected by a conveyor.

A method for processing milk according to a specific embodiment of the present invention is provided, wherein the system for processing milk further comprises a freezer connected to the autoclaving treatment device, the freezer is a wheeled tunnel freezer; a built-in metal detector is provided on the conveyor, and the autoclaving treatment device comprises an air knife drying device.

Another object of the present invention is to provide a bottle for use in the system for processing milk described above.

A bottle according to a specific embodiment of the present invention is provided, wherein the bottle is used for storing milk during high pressure processing, freezing and thawing, the bottle comprises a bottle body and a cap, the bottle body comprises a bottom-up base and a narrow neck, the narrow neck terminates at an open tube end, the open tube end is covered with a removable cap that is suitable for freezing and thawing, the cap comprises a body portion comprising a top portion and a side wall, the side wall forms a recessed interior space, the side wall is capable of enclosing a portion of the open tube end, the top portion comprises a deformable body having a certain volume; the deformable body is made of a deformable material, which is adapted to the frozen and thawed state of the bottle, but does not leak or contaminate the closed milk; the cap is provided with an internal thread to intermesh with a corresponding external thread at the open tube end; the bottle further comprises a tamper-resistant device, the tamper-resistant device comprises a ridged outer ring on the narrow neck and a corresponding frangible detachable bridge on the cap, the ridged outer ring is located at a lower outer end of the open tube end, and the tamper-resistant device is tamper-resistant when the cap is screwed to or unscrewed from the open tube end.

A bottle according to a specific embodiment of the present invention is provided, wherein the bottle is made of polyethylene terephthalate and the deformable body has a vent.

The deformable body can be made of silicone. The ridged outer ring is a limiting portion that prevents the cap from being continuously unscrewed. The fragile detachable bridge is composed of a plurality of teeth spaced apart. When the fragile detachable bridge is used to apply a relative screwing action to the cap, the bridge is broken in the middle, and the portion above the broken portion of the bridge and the portion below the broken portion of the bridge with the screwed structure can be detachably fixed. The internal thread of the cap is provided with an annular protrusion, the annular protrusion has an included angle of 60°, the annular diameter at the apex of the protrusion is 35.7±0.15 mm, the outer diameter of the cap is 40.6 ±0.15 mm, the inner diameter of the portion above the bridge is 37.6 ± 0.15 mm, and the inner diameter of the portion below the bridge is 39.2 ± 0.15 mm.

The vent has a diameter of 0.5-1 mm, and the vent is a unidirectional vent.

The bottle is a bottle of 1 L.

An open woven crate is provided in the freezer.

The recommended application torque for the cap is: 15-25 in/lb, and preferably, the torque is 13-22 in/lb.It is still another object of the present invention to provide a method for processing milk using the system for processing milk described above.

A method for processing milk according to a specific embodiment of the present invention is provided, wherein the method comprises the steps of:
(1) thermally pasteurizing the raw milk to form thermally sterilized milk;
(2) subjecting the thermally sterilized milk obtained in the step (1) to at least one autoclaving treatment to kill excess bacteria in a frozen environment to help maintain product freshness and nutrients, and then dehydrating the outer package with an air knife drying device to obtain secondary sterilized milk;
(3) freezing the secondary sterilized milk obtained in the step (2) to -18°C, which is the obtained milk.

A method for processing milk according to a specific embodiment of the present invention is provided, wherein in the step (1), the thermal pasteurization kills harmful bacteria under the processing parameter at a temperature of 68°C for 2.5-3.0 minutes.

A method for processing milk according to a specific embodiment of the present invention is provided, wherein in the step (2), the autoclaving treatment comprises injecting water into a cavity, and then pressurizing the cavity to a pressure greater than 500 MPa for 2-3 min.

A method for processing milk according to a specific embodiment of the present invention is provided, wherein in the step (1), the raw milk is cooled to 6°C or lower prior to thermal pasteurization to maintain food safety issues and/or to minimize the growth of bacteria and other pathogens.

A method for processing milk according to a specific embodiment of the present invention is provided, wherein in the step (1), the raw milk is degassed prior to thermal pasteurization.

A method for processing milk according to a specific embodiment of the present invention is provided, wherein in the step (1), the cooled milk is homogenized prior to thermal pasteurization.

A method for processing milk according to a specific embodiment of the present invention is provided. Further, the method comprises the steps of:
(1) keeping the raw milk refrigerated and stored in refrigerated farm storage tanks after milking and being collected from the farm usually at 6°C or lower to maintain food safety issues and/or to minimize the growth of bacteria and other pathogens;
(2) collecting crude frozen milk through a bulk moving tanker, keeping the refrigerating temperature at 4°C to prevent bacterial growth from leading to spoilage and/or inhibiting bacterial growth, and testing each tank load prior to filling to ensure that there are no pathogens and nutritional qualities that do not meet specifications;
(3) taking the frozen milk to the processing site by the moving tanker, transferring the cooled milk to the storage tank, and maintaining the temperature at 4°C or lower;
(4) homogenizing the cooled milk to avoid fat separation;
(5) transferring the milk to a thermal pasteurization device to rapidly heat and cool the milk to kill any harmful bacteria under the treatment parameter at 68°C for 2.5-3.0 minutes;
(6) filling thermally pasteurized milk into the bottle;
(7) transporting the bottle by a conveyor in which a built-in metal detection device is filled;
(8) filling or packaging several bottles into a special high-pressure treatment tank;
(9) automatically entering the cavity of the high-pressure treatment device by each high-pressure treatment tank at least once to kill residual bacteria or viruses, so that the finished product is capable of maintaining completely fresh food characteristics and maintaining completely fresh taste and nutrition, wherein the high-pressure treatment device comprises injecting water into a cavity, and then pressurizing the cavity to a pressure of 500 MPa for 3 minutes;
(10) at the end of the pressurization, unloading each high-pressure treatment tank from the high-pressure treatment device and taking out the bottle, and then dehydrating or drying the bottle by a built-in air knife system;
(11) putting the dehydrated or dried bottles in suitable containers and stacking them in a cart, and then passing through the wheeled tunnel freezer to reach minus 18°C in 140 minutes;
(12) unpacking the frozen bottles, storing them in a refrigerated container after being packaged in a centralized manner, and waiting for the shipment to exit;
(13) after reaching the destination, thawing the bottles containing milk to restore the milk to the liquid state for sale and/or distribution with a shelf life of more than 7 days.

Non-degassed milk, which may have dispersed air and gas, can affect subsequent processing yields and measurement accuracy, such as inaccurate measurement of milk volume, heating surface fouling in pasteurizers, the influence on the efficiency of slag removal in the separator, inaccurate fat standardization, etc.

Homogenization is to make the protein and fat granules in milk smaller, so that the milk is more fine and uniform in texture and tastes better.

The autoclaving treatment in the present invention is autoclaving in a non-heated state.

Pasteurization is to heat the mixed raw materials to 68-70°C, and keep this temperature for 30 min and then rapidly cool to 4-5°C. Because the fatal point of common bacteria is 68°C and 30 min or less, the mixed raw materials can kill pathogenic bacteria and most non-pathogenic bacteria after being treated by this method; the mixed raw materials cools suddenly, and sharp heat and cold changes can also result in bacterial death. However, after pasteurization, a small number of harmless or beneficial, heat-resistant bacteria or bacterial spores are retained. Therefore, pasteurized milk should be stored at a temperature of about 4°C and can only be stored for 3 to 10 days, usually about 7 days.

The food high-pressure processing (HPP) technology is to apply a pressure of 300-600 MPa to a soft-packed food or the like with water as a medium and a pressure of 100-1000 MPa with high-grade hydraulic oil in a closed ultra-high-pressure container so as to kill almost all of the bacteria, molds and yeasts, without causing nutrient damage and flavor changes like high temperature sterilization. The principle is that the food high-pressure processing technology destroys the high-level structure of proteins by destroying non-covalent bonds in the bacterial proteins, leading to protein coagulation and enzyme inactivation. Ultra-high pressure can also cause cell membrane rupture, so that various cell damages, such as outflow, occur in chemical components in thallus. The advantage is that the food high-pressure processing technology kills pathogenic bacteria and spoilage bacteria without heating or adding chemical preservatives as a physical method, thereby ensuring food safety and extending the shelf life of food; secondly, HPP, taken as a non-thermal processing method, has no drastic change in temperature during the sterilization process, destroys no covalent bonds, and has less influence on small molecular substances, and is capable of better maintaining the original color, fragrance, taste and functional and nutritional ingredients of food.

The milk after the raw milk is subjected to pasteurization and high-pressure treatment (HPP) can be extended to a longer shelf life after being frozen, so that it can be transported to other countries and then delivered to retail stores or delivered to your door. The raw milk is frozen after being subjected to pasteurization and high-pressure treatment, and then is stored in a refrigerated container after being packaged in a centralized manner and being packaged using heat shrinkable plastics, and waits for the shipment to exit. At the arrival destination of the milk, the milk bottles are thawed to restore the liquid state for sale or distribution. The shelf life exceeds 7 days and can be up to 21 days.

Compared with the prior art, the present invention has the following beneficial effects.
(1) The present invention comprises a thermal pasteurization device and an autoclaving treatment device, which can perform thermal pasteurization and autoclaving treatment on raw milk by using a system for processing milk to ensure that the milk closest to the fresh taste is obtained, the milk storage capacity is improved and the shelf life of milk is extended.
(2) A high-pressure treatment device is used to kill as many pathogenic microorganisms as possible to assist thermal pasteurization, so as to maintain better taste and cleanliness, as well as less harmful bacteria.
(3) The milk processed by the method of the present invention can be used for transportation by a long distance, and the frozen milk can be exported to a foreign country or a farther place, and then is thawed to a liquid state after reaching the destination for distribution.
(4) According to the method for processing milk of the present invention, because the autoclaving process is increased, the obtained milk is closer to the taste of fresh raw milk, the shelf life is extended, the milk is transported overseas in a manner of transporting the milk by a cold chain after being frozen and thawing the milk to restore the liquid state, and at the same time, the shelf life is extended during sales or distribution in the market for up to 21 days or more.
(5) The method for processing milk of the present invention has a short time, which reduces the influence on the nutrient composition and flavor of the milk.
(6) The method for processing milk of the present invention does not add preservatives, has less chemical changes, kills pathogenic bacteria and spoilage bacteria without heating or adding chemical preservatives using a physical method as much as possible, and retains more nutrient substances and fresh taste.
(7) The milk bottle is made of polyethylene terephthalate and good in mechanical properties. The impact strength is 3 to 5 times that of other films. The milk bottle is good in folding resistance, heat-resistant and cold-resistant, little in influence on its mechanical properties at a high or low temperature, low in gas and water vapor permeability, excellent in gas, water, oil and odor preventing properties, non-toxic, tasteless, and good in hygienic safety, and will not deteriorate for a long time.

### BRIEF DESCRIPTION OF THE DRAWINGS

FIG. 1 is a process flow diagram illustrating a system for processing milk according to a specific embodiment the present invention.
FIG. 2 is a schematic diagram illustrating the structure of a bottle body of a bottle according to a specific embodiment of the present invention.
FIG. 3 is a first schematic diagram illustrating the structure of a cap of a bottle of a system for processing milk according to a specific embodiment of the present invention.
FIG. 4 is a second schematic diagram illustrating the structure of a cap of a bottle of a system for processing milk according to a specific embodiment of the present invention.
FIG. 5 is a perspective diagram illustrating a cap of a bottle of a system for processing milk according to a specific embodiment of the present invention.
FIG. 6 is a first cross-sectional diagram illustrating a cap of a bottle of a system for processing milk according to a specific embodiment of the present invention.
FIG. 7 is a second cross-sectional diagram illustrating a cap of a bottle of a system for processing milk according to a specific embodiment of the present invention.
   14 bottle body; 42 base; 44 narrow neck; 46 open tube end; 48 cap; 49 deformable body; 50 vent; 51 detachable bridge; 52 annular protrusion

### DESCRIPTION OF THE EMBODIMENTS

In order to make the objects, technical solutions and advantages of the present invention more clear, the technical solutions of the present invention will be described in detail below. It is apparent that the described embodiments are merely a part of the embodiments of the present invention, rather than all of the embodiments. All other embodiments obtained by those skilled in the art based on the embodiments of the present invention without creative efforts fall within the scope of protection of the present invention.

The same components are denoted by the same reference numerals. It should be noted that the words "front", "back", "left", "right", "upper" and "lower" used in the following description refer to the directions in the drawings, and the words "bottom" and "top", "inner" and "outer" refer to the directions toward or away from the geometric center of a particular component, respectively.

### Embodiment 1

The present embodiment provides a system for processing milk, comprising a thermal pasteurization device and an autoclaving treatment device connected by a conveyor.

A method for processing milk comprises the steps of:
(1) thermally pasteurizing the raw milk to form thermally sterilized milk;
(2) subjecting the thermally sterilized milk obtained in the step (1) to autoclaving treatment at the pressure of 500 MPa, and then dehydrating the outer package with an air knife drying device to obtain secondary sterilized milk, which is the obtained milk that can be transported by a long distance.

### Embodiment 2

The present embodiment provides a system for processing milk, comprising a thermal homogenizing device, a degassing device, a pasteurization device, an autoclaving treatment device and a freezer connected to the thermal pasteurization device through a conveyor, which are connected in sequence. A built-in metal detector is provided on the conveyor, and the autoclaving treatment device comprises an air knife drying device. The freezer is a wheeled tunnel freezer; the freezer is provided with an open woven crate.

A method for processing milk comprises the steps of:
(1) cooling the raw milk is to 2°C, homogenizing and then degassing the cooled milk, heating the milk to 68°C, and keeping this temperature for 2.5 min and then rapidly cooling to 5°C to form thermally sterilized milk;
(2) subjecting the thermally sterilized milk obtained in the step (1) to autoclaving treatment twice at the pressure of 600 MPa in which it lasts 3 minutes each time, and then dehydrating the outer package with an air knife drying device for 2 minutes to obtain secondary sterilized milk;
(3) freezing the secondary sterilized milk obtained in the step (2) to -18°C in the wheeled tunnel freezer for 140 minutes, which is the obtained milk that can be transported by a long distance.

### Embodiment 3

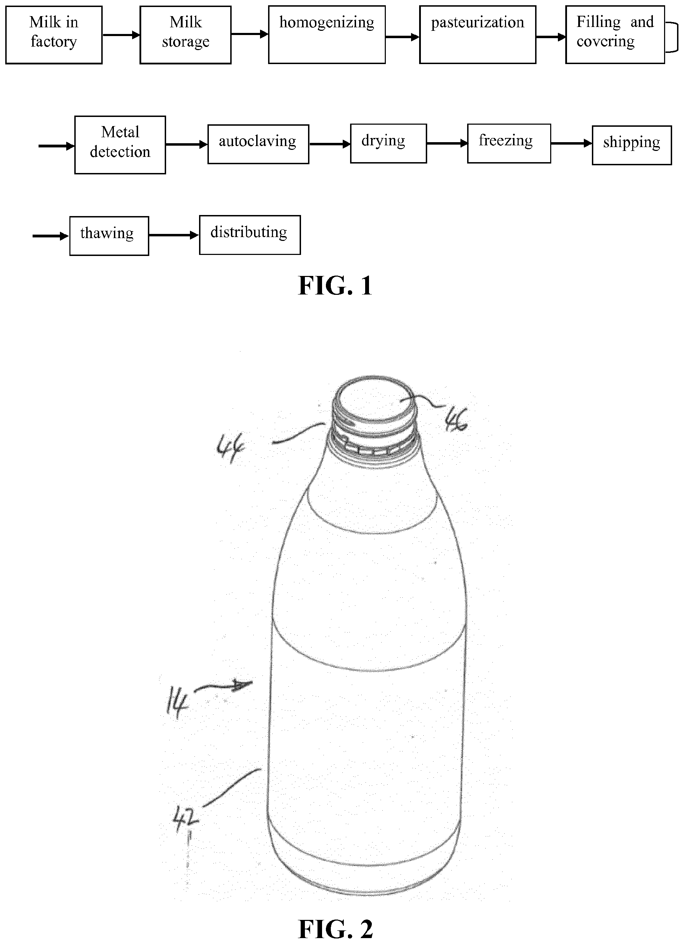

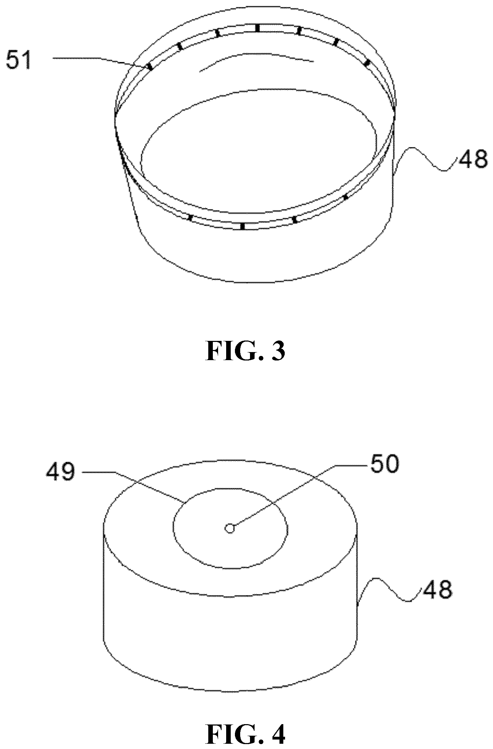

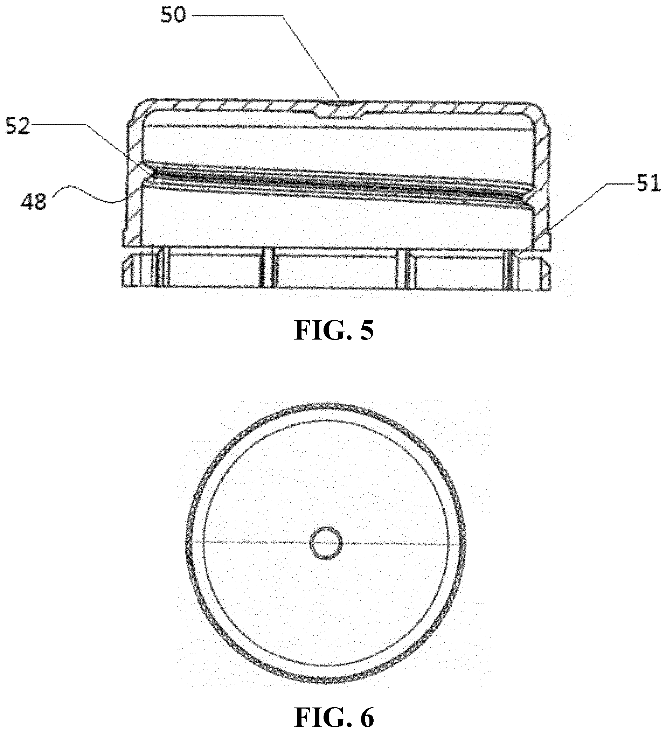

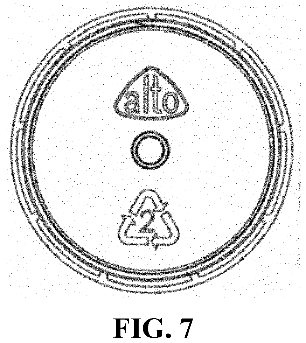

As shown in FIGs. 2-7, the present embodiment provides a system for processing milk, comprising a thermal pasteurization device, an autoclaving treatment device and a freezer connected to the thermal pasteurization device through a conveyor. A built-in metal detector is provided on the conveyor, and the autoclaving treatment device comprises an air knife drying device. The freezer is a wheeled tunnel freezer. Milk is filled in a bottle in the milk processing process. The milk bottle is composed of a polyethylene terephthalate bottle and a cap 48. The cap 48 is provided with a partially deformable body 49. The freezer is provided with an open woven crate.

A method for processing milk comprises the steps of:
(1) cooling the raw milk is to 6°C, homogenizing and then degassing the cooled milk, heating the milk to 68°C by the thermal pasteurization device, and keeping this temperature for 140 seconds and then rapidly cooling to 4°C to form thermally sterilized milk;
(2) filling the thermally sterilized milk obtained in the step (1) in a milk bottle, transporting it to the autoclaving treatment device through a conveyor, detecting the metal material using a built-in metal detector during the transportation through a conveyor, then performing autoclaving treatment at the pressure of 700 MPa for 3 minutes, and then dehydrating the outer package with an air knife drying device for 2 minutes to obtain secondary sterilized milk;
(3) placing the milk bottles containing the secondary sterilized milk obtained in the step (2) in open woven crates, passing through the wheeled tunnel freezer for 140 minutes, and freezing them to -18°C, putting them into a freezer container for transportation, and then thawing them to 2-6°C after reaching the destination for sale.

### Embodiment 4

As shown in FIG. 1, the embodiment provides a system for processing milk, comprising a homogenizing device, a thermal pasteurization device, an autoclaving treatment device and a freezer connected to the thermal pasteurization device through a conveyor, a built-in metal detector is provided on the conveyor, and the autoclaving treatment device comprises an air knife drying device. The freezer is a wheeled tunnel freezer; the freezer is provided with an open woven crate.

The milk is stored in a bottle during high-pressure processing, freezing and thawing, as shown in FIGs. 2-7. The bottle comprises a bottle body 14 and a cap 48. The bottle body 14 comprises a bottom-up base 42 and a narrow neck 44, the narrow neck 44 terminates at an open tube end 46, the open tube end 46 is covered with a removable cap 48 that is suitable for freezing and thawing, the cap 48 comprises a body portion comprising a top portion and a side wall, the side wall forms a recessed interior space, the side wall is capable of enclosing a portion of the open tube end 46, the top portion comprises a deformable body 49 having a certain volume, the deformable body 49 is made of a deformable material, the deformable material is adapted to the frozen and thawed state of the bottle, but does not leak or contaminate the closed milk; the cap 48 is provided with an internal thread to intermesh with a corresponding external thread at the open tube end 46; the bottle further comprises a tamper-resistant device, the tamper-resistant device comprises a ridged outer ring on the narrow neck 44 and a corresponding frangible detachable bridge 51 on the cap 48, the ridged outer ring is located at a lower outer end of the open tube end 46, and the tamper-resistant device is tamper-resistant when the cap 48 is screwed to or unscrewed from the open tube end 46.

A method for processing milk comprises the steps of:
(1) cooling the raw milk is to 2-6°C, homogenizing and then degassing the cooled milk, heating the milk to 68°C by the thermal pasteurization device, and keeping this temperature for 2.5 min and then rapidly cooling to 5°C to form thermally sterilized milk;
(2) filling the thermally sterilized milk obtained in the step (1) in a milk bottle, and covering with a cap 48 to prevent the milk from leaking or being contaminated, and then placing the milk bottle in the can, wherein the size of the can is suitable for being installed in a high-pressure processing (HPP) device, the device is cylindrical and has sides and ends, the device is shaped and adapted to lie on its side and has a vertical end and an open upper surface, each of the cans can accommodate several milk bottles to be packed in a queue, then the milk bottles are transported to the autoclaving treatment device through a conveyor, the metal material is detected during the transportation through a conveyor, then the autoclaving treatment is performed at the pressure of 600 MPa for 3 minutes, the milk bottle is dehydrated or dried for 2 minutes using an air knife drying device, and the an air knife drying device uses a centrifugal high-speed dry heat blower to obtain secondary sterilized milk;
(3) taking the milk bottles containing the secondary sterilized milk obtained in the step (2) out from the canister and placing them in open woven crates, passing through the wheeled tunnel freezer for 140 minutes, and freezing them to -18°C, putting them into a freezer container for transportation, and then thawing them to 2-6°C after reaching the destination for sale.

### Embodiment 5

As shown in FIG. 1, the embodiment provides a system for processing milk, comprising a thermal pasteurization device, an autoclaving treatment device and a freezer connected to the thermal pasteurization device through a conveyor, a built-in metal detector is provided on the conveyor, and the autoclaving treatment device comprises an air knife drying device. The freezer is a wheeled tunnel freezer; the freezer is provided with an open woven crate. The milk is stored in a bottle during high-pressure processing, freezing and thawing, as shown in FIGs. 2-7. The bottle comprises a bottle body 14 and a cap 48. The bottle is a milk bottle of 1 L made of polyethylene terephthalate. The bottle body 14 comprises a bottom-up base 42 and a narrow neck 44, the narrow neck 44 terminates at an open tube end 46, the open tube end 46 is covered with a removable cap 48 that is suitable for freezing and thawing, the cap 48 comprises a body portion comprising a top portion and a side wall, the side wall forms a recessed interior space, the side wall is capable of enclosing a portion of the open tube end 46, the top portion comprises a deformable body 49 having a certain volume, the deformable body 49 is provided with a vent 50 in the middle, the deformable body 49 is made of silicone, the deformable material is adapted to the frozen and thawed state of the bottle, but does not leak or contaminate the closed milk; the cap 48 is provided with an internal thread to intermesh with a corresponding external thread at the open tube end 46; the bottle further comprises a tamper-resistant device, the tamper-resistant device comprises a ridged outer ring on the narrow neck 44, the ridged outer ring is located at a lower outer end of the open tube end 46, and the tamper-resistant device may prevent displacement when the cap 48 is screwed to or unscrewed from the open tube end 46.

A method for processing milk comprises the steps of:
(1) keeping the raw milk refrigerated and stored in refrigerated farm storage tanks after milking and being collected from the farm usually at 6°C (or 4°C) to maintain food safety issues and/or to minimize the growth of bacteria and other pathogens;
(2) collecting crude frozen milk through a bulk moving tanker, keeping the refrigerating temperature at 4°C to prevent bacterial growth from leading to spoilage and/or inhibiting bacterial growth, and testing each tank load prior to filling to ensure that there are no pathogens and nutritional qualities that do not meet specifications;
(3) taking the frozen milk to the processing site by the moving tanker, transferring the cooled milk to the storage tank, and maintaining the temperature at 4°C (or at 2°C, 3°C);
(4) homogenizing the cooled milk to avoid fat separation;
(5) transferring the milk to a thermal pasteurization device to rapidly heat and cool the milk to kill any harmful bacteria under the treatment parameter at 68°C for 3.0 minutes (or 2.5 minutes);
(6) filling thermally pasteurized milk into the bottle of 1 L (or 225 ml) and covering with a cap 48 to ensure that no leakage occurs during the subsequent freezing process;
(7) transporting the bottle by a conveyor in which a built-in metal detection device is filled;
(8) filling or packaging several bottles into a special high-pressure treatment tank;
(9) automatically entering the cavity of the high-pressure treatment device by each high-pressure treatment tank at least once (or twice or three times) to kill residual bacteria or viruses, so that the finished product is capable of maintaining completely fresh food characteristics and maintaining completely fresh taste and nutrition, wherein the high-pressure treatment device comprises injecting water into a cavity, and then pressurizing the cavity to a pressure of 500 MPa for 3 minutes;
(10) at the end of the pressurization, unloading each high-pressure treatment tank from the high-pressure treatment device and taking out the bottle, and then dehydrating or drying the bottle by a built-in air knife system;
(11) putting the dehydrated or dried bottles in open woven crates (i.e., a woven crate with an upper opening) and stacking the open woven crates in a cart or conveyor, and then passing through the wheeled tunnel freezer to reach minus 18°C in 140 minutes;
(12) unpacking the frozen bottles, storing them in a refrigerated container after being packaged in a centralized manner, and waiting for the shipment to exit;
(13) after reaching the destination, thawing the bottles containing milk to restore the milk to the liquid state for sale and/or distribution with a shelf life of more than 21 days.

The ridged outer ring on the bottle body 14 is a limiting portion that prevents the cap 48 from being continuously unscrewed. The fragile detachable bridge 51 is composed of a plurality of teeth spaced apart. When the fragile detachable bridge 51 is used to apply a relative screwing action to the cap 48, the bridge is broken in the middle, and the portion above the broken portion of the bridge and the portion below the broken portion of the bridge with the screwed structure can be detachably fixed. The internal thread of the cap 48 is provided with an annular protrusion 52, the annular protrusion 52 has an included angle of 60°, the annular diameter at the apex of the protrusion is 35.7±0.15 mm, the outer diameter of the cap 48 is 40.6 ±0.15 mm, the inner diameter of the portion above the bridge is 37.6 ± 0.15 mm, and the inner diameter of the portion below the bridge is 39.2 ± 0.15 mm.

The vent has a diameter of 0.5-1 mm, and the vent is a unidirectional vent.

The bottle is a bottle of 1 L.

An open woven crate is provided in the freezer.

The recommended application torque for the cap is: 15-25 in/lb, and preferably, the torque is 13-22 in/lb.

The processing time for each batch (i.e., one processing) comprises the following examples:
1, thermal pasteurization for 2.5-3.0 minutes;
2, filling in 16 milk bottles for 5 minutes;
3, high-pressure processing (HPP) device 6 minutes;
4, dehydrating with the air knife for 2 minutes;
5, filling in the crate and freezing for 140 minutes.

The total time for each batch is approximately 156 minutes.

The shelf life of milk after being subjected to the combining processing of the thermal pasteurization and non-thermal pasteurization or high-pressure treatment (HPP) device is about 21 days after being frozen.

In the entire specification of the specification, the words "comprise" and variations thereof such as "comprises" and "comprising" are not intended to exclude other additives, ingredients, integers or steps.

It should also be noted that, if the product, method or process described or claimed herein is incompletely sold as a separate part or "some components", such use will fall within the scope of the present invention.

The collection requirements or volume can be adapted in a manner of changing the number of trucks or collecting fresh milk. The analytical and metal detection methods are not critical to the method, and can be performed at least at any point in the method, and are therefore optional. The size and number of tanks will vary. Appropriate filtering can also be included where appropriate.

Thermal pasteurization can be varied in temperature and time to accommodate its combination with non-thermal pasteurization. That is to say, HPP can also vary in pressure and time. The shape and size of the bottles can also vary with the method of stopping and filling as long as they can be frozen, transported and thawed. The same applies to cans, crates and cartons, which can vary as needed. Freezing in the tunnel can also vary to accommodate the volume and field requirements of the milk being processed.

Although useful, dehydration after freezing may not be necessary.

Other optional steps comprise degassing the cooled milk prior to thermal pasteurization and using a degassing device to remove the dispersed air and gas (if present, it may affect subsequent processing yield measurements).

These and other functions and features of the present invention, as well as the operational methods and functional structures of the related element in conjunction with the manufacturing parts and economics will become more apparent with reference to the drawings and the following description, all of which are a part of this specification, where similar reference numbers specify the corresponding locations in different figures.

It is well known that the term "comprising" can be attributed to a unique or inclusive meaning in different jurisdictions. For the purposes of this specification, the term "comprising" shall have an inclusive meaning unless otherwise indicated, that is, it will be considered to not only include the listed components that are directly referenced, but also include other non-specified components or elements. This basic principle will also be used when the term "containing" or "comprising" is used in relation to one or more steps in a method or process. The terms "comprising and possessing" or "having and comprising" used herein are defined to mean comprising (i.e., an open language).

For the purposes of the following description, the terms "upper", "up", "lower", "down", "right", "left", "vertical", "horizontal", "top", "bottom", "side", "longitudinal", "lateral", "front", "back" and derivatives thereof shall be referred to in the present invention as it is oriented in the drawings. However, it is to be understood that the present invention may employ various substitute variants, except where the opposite is clearly stated.

It is also to be understood that the specific devices shown in the drawings and described in the following description are merely exemplary embodiments of the present invention. Thus, the particular dimensions and other physical characteristics associated with the embodiments of the present invention are not considered to be limiting.

It will be appreciated that, although the above is given by the exemplified embodiment of the present invention, all such and other modifications and variations, which are apparent to those skilled in the art, are considered to belong to a wide range and scope, as described above.

The above is merely a specific embodiment of the present invention, but the scope of protection of the present invention is not limited thereto. Any changes or substitutions conceivable to those skilled in the art in the technical scope disclosed by the present disclosure fall within the scope of protection of the present invention. Therefore, the scope of protection of the present invention should be determined by the scope of protection of the appended claims.

## Claims

1. A system for processing milk, wherein the system for processing milk comprises a thermal pasteurization device and an autoclaving treatment device connected by a conveyor.

2. The system for processing milk according to claim 1, wherein the system for processing milk further comprises a freezer connected to the autoclaving treatment device, the freezer is a wheeled tunnel freezer; a built-in metal detector is provided on the conveyor, and the autoclaving treatment device comprises an air knife drying device.

3. A bottle for use in the system for processing milk according to claim 1 or 2, wherein the bottle is used for storing milk during high-pressure processing, freezing and thawing, the bottle comprises a bottle body and a cap, the bottle body comprises a bottom-up base and a narrow neck, the narrow neck terminates at an open tube end, the open tube end is covered with a removable cap that is suitable for freezing and thawing, the cap comprises a body portion comprising a top portion and a side wall, the side wall forms a recessed interior space, the side wall is capable of enclosing a portion of the open tube end, the top portion comprises a deformable body having a certain volume; the deformable body is made of a deformable material, which is adapted to the frozen and thawed state of the bottle, but does not leak or contaminate the closed milk; the cap is provided with an internal thread to intermesh with a corresponding external thread at the open tube end; the bottle further comprises a tamper-resistant device, the tamper-resistant device comprises a ridged outer ring on the narrow neck and a corresponding frangible detachable bridge on the cap, the ridged outer ring is located at a lower outer end of the open tube end, and the tamper-resistant device is tamper-resistant when the cap is screwed to or unscrewed from the open tube end.

4. The bottle according to claim 3, wherein the bottle is made of polyethylene terephthalate and the deformable body has a vent.

5. A method for processing milk using the system for processing milk according to claim 1 or 2, wherein the method comprises the steps of:
(1) thermally pasteurizing the raw milk to form thermally sterilized milk;
(2) subjecting the thermally sterilized milk obtained in the step (1) to at least one autoclaving treatment to kill excess bacteria in a frozen environment to help maintain product freshness and nutrients, and then dehydrating the outer package with an air knife drying device to obtain secondary sterilized milk;
(3) freezing the secondary sterilized milk obtained in the step (2) to -18°C, which is the obtained milk.

6. The method for processing milk according to claim 5, wherein in the step (1), the thermal pasteurization kills harmful bacteria under the processing parameter at a temperature of 68°C for 2.5-3.0 minutes.

7. The method for processing milk according to claim 5, wherein in the step (2), the autoclaving treatment comprises injecting water into a cavity, and then pressurizing the cavity to a pressure greater than 500 MPa for 2-3 min.

8. The method for processing milk according to claim 5, wherein in the step (1), the raw milk is cooled to 6°C or lower prior to thermal pasteurization to maintain food safety issues and/or to minimize the growth of bacteria and other pathogens.

9. The method for processing milk according to claim 5, wherein in the step (1), the raw milk is degassed prior to thermal pasteurization.

10. The method for processing milk according to any of claims 5-8, wherein the method comprises the steps of:
(1) keeping the raw milk refrigerated and stored in refrigerated farm storage tanks after milking and being collected from the farm usually at 6°C or lower to maintain food safety issues and/or to minimize the growth of bacteria and other pathogens;
(2) collecting crude frozen milk through a bulk moving tanker, keeping the refrigerating temperature at 4°C to prevent bacterial growth from leading to spoilage and/or inhibiting bacterial growth, and testing each tank load prior to filling to ensure that there are no pathogens and nutritional qualities that do not meet specifications;
(3) taking the frozen milk to the processing site by the moving tanker, transferring the cooled milk to the storage tank, and maintaining the temperature at 4°C or lower;
(4) homogenizing the cooled milk to avoid fat separation;
(5) transferring the milk to a thermal pasteurization device to rapidly heat and cool the milk to kill any harmful bacteria under the treatment parameter at 68°C for 2.5-3.0 minutes;
(6) filling thermally pasteurized milk into the bottle;
(7) transporting the bottle by a conveyor in which a built-in metal detection device is filled;
(8) filling or packaging several bottles into a special high-pressure treatment tank;
(9) automatically entering the cavity of the high-pressure treatment device by each high-pressure treatment tank at least once to kill residual bacteria or viruses, so that the finished product is capable of maintaining completely fresh food characteristics and maintaining completely fresh taste and nutrition, wherein the high-pressure treatment device comprises injecting water into a cavity, and then pressurizing the cavity to a pressure of 500 MPa for 3 minutes;
(10) at the end of the pressurization, unloading each high-pressure treatment tank from the high-pressure treatment device and taking out the bottle, and then dehydrating or drying the bottle by a built-in air knife system;
(11) putting the dehydrated or dried bottles in suitable containers and stacking them in a cart, and then passing through the wheeled tunnel freezer to reach minus 18°C in 140 minutes;
(12) unpacking the frozen bottles, storing them in a refrigerated container after being packaged in a centralized manner, and waiting for the shipment to exit;
(13) after reaching the destination, thawing the bottles containing milk to restore the milk to the liquid state for sale and/or distribution with a shelf life of more than 7 days.
